# EUROPÄISCHE PATENTSCHRIFT

(11) **EP 3 172 345 B1**
(45) Veröffentlichungstag und Bekanntmachung des Hinweises auf die Patenterteilung: **09.09.2020**
(21) Anmeldenummer: 15749735.5
(22) Anmeldetag: 21.07.2015
(51) Int. Cl.: C21D 8/04, C21D 9/00, C21D 9/46, C21D 1/34, F27B 9/36

(54) **VERFAHREN ZUM AUFHEIZEN VON STAHLBLECHEN**
METHOD FOR HEATING UP STEEL SHEETS
PROCÉDÉ DE CHAUFFAGE DE TÔLES D'ACIER

(30) Priorität: 23.07.2014 DE 102014110415
(43) Veröffentlichungstag der Anmeldung: 31.05.2017
(73) Patentinhaber: Voestalpine Stahl GmbH, 4020 Linz (AT)
(72) Erfinder: HASLMAYR, Michael, A-4293 Gutau (AT); KOLNBERGER, Siegfried, A-4061 Pasching (AT); KURZ, Thomas, A-4020 Linz (AT); STEGFELLNER, Leopold, A-4224 Wartberg ob der Aist (AT); SOMMER, Andreas, 73453 Abtsgmünd (DE)
(74) Vertreter: HGF
(86) Internationale Anmeldenummer: PCT/EP2015/066634
(87) Internationale Veröffentlichungsnummer: WO 2016/012442

(56) Entgegenhaltungen:
- EP-A1- 2 730 665
- EP-A2- 1 867 738
- EP-B1- 2 014 777
- WO-A1-2013/000001
- DE-A1-102010 017 905

## Beschreibung

Die Erfindung betrifft ein Verfahren zum Aufheizen von Stahlblechen, insbesondere Stahlblechen, die anschließend einem Warmumform- und Härteschritt unterzogen werden.

Es ist bekannt, dass Stahlbleche, die einem Warmumformschritt und einer Abschreckhärtung unterzogen werden sollen, zunächst - zumindest teilbereichsweise - auf eine Austenitisierungstemperatur erhitzt werden müssen, um eine Umwandlung des Austenits in Martensit und damit die Erzeugung eines gehärteten Gefüges zu ermöglichen.

Hierzu muss das Gefüge insbesondere über den sogenannten AC3-Punkt des Stahlmaterials erhitzt werden.

Aus der WO 2013/000001 A1 ist ein Verfahren zum Erwärmen eines Formbauteils für ein anschließendes Presshärten sowie Durchlaufofen zum bereichsweisen Erwärmen eines auf eine vorgegebene Temperatur vorgewärmten Formbauteils auf eine höhere Temperatur bekannt.

Hierin wird ausgeführt, dass Härtegefüge, die bei austenitischen Stählen zu Zugfestigkeiten von über 1.500 MPa bei einer Dehnung im Bereich von 6 % führen können, häufig nur in Teilbereichen des Werkstückes notwendig sind, während in anderen Bereichen höhere Dehnungen von beispielsweise 15 % bis 17 % gefordert sind. Dementsprechend soll gemäß dieser Schrift ein Verfahren zum Erwärmen eines Formbauteiles auf unterschiedliche Temperaturen so ausgestaltet werden, dass trotz eines kontinuierlichen Durchlaufs durch eine Erwärmungseinrichtung die Formbauteile eine für das anschließende Presshärten erforderliche Wärmebehandlung mit einer verbesserten Temperaturführung besitzen. Hierfür schlägt dieses Dokument vor, dass das Formbauteil während seiner Förderung durch ein Heizelementfeld mit Hilfe bezüglich der Förderrichtung in Längs- und Querreihe angeordneten, zumindest gruppenweisen mit unterschiedlicher Heizleistung ansteuerbaren Heizelementen derart unterschiedlich erwärmt wird, dass Teile des Blechs einer Austenitisierungstemperatur erreichen, während andere Teile des Blechs diese nicht erreichen. Entsprechend dieser Maßnahme sollen Heizelemente mit unterschiedlicher Heizleistung angesteuert werden können, wobei mit der Möglichkeit Heizelemente sowohl entlang von Längsreihen als auch entlang von Querreihen zumindest gruppenweise voneinander unabhängig anzusteuern, auf die Temperatur der Formbauteile in einem in Förderrichtung verlaufenden Längsstreifen während der Bauteilförderung Einfluss genommen werden kann, um im Bereich solcher Längsstreifen vorgegebene Temperaturniveaus nicht nur zu erreichen sondern auch halten zu können. Zudem können auch entlang gewünschter Längsreihen ansteuerbare Kühleinrichtungen in Förderrichtung die Bauteile streifenförmig abkühlen.

Aus der DE 10 2012 001 742 A1 ist eine Vorrichtung zum Erwärmen von Blechwerkstücken für ein nachfolgendes Warmumformen und insbesondere Presshärten bekannt. Diese Vorrichtung soll die mit Rollenherdöfen einhergehenden Nachteile nicht oder zumindest nur in einem verminderten Umfang aufweisen und mit flexibel unterschiedlichen Erwärmungsanforderungen gehandhabt werden können. Hierzu soll die Vorrichtung mehrere Wärmstationen aufweisen, wobei eine erste Wärmstation vorhanden sein soll mit einer induktiven bzw. induktiv betriebenen Erwärmungseinrichtung, in der die Blechwerkstücke ohne zu verweilen schnell auf eine vorgegebene Temperatur erwärmt werden können, eine zweite Wärmstation, in der die Blechwerkstücke verweilen und dabei auf eine vorgegebene Temperatur erwärmt oder abgekühlt werden oder auf einer bestimmten Temperatur gehalten werden und eine dritte Wärmstation, in der die Blechwerkstücke verweilen und dabei auf eine vorgegebene Temperatur erwärmt, abgekühlt oder gehalten werden können. Die erste Wärmstation soll aufgrund des induktiven Erwärmungsprinzips ein schnelles und zielgerichtetes Erwärmen der Blechwerkstücke ermöglichen, wobei die erste Wärmstation vorzugsweise als Durchgangsstation ausgebildet ist und die zu erwärmenden Blechstücke einzeln oder gegebenenfalls auch zu mehreren und ohne nennenswerte Verweilzeit durch die erste Station durchgeführt werden, wobei die Erwärmung per Längs- oder Querfeldinduktion erfolgen kann. Die zweite und dritte Wärmstation können je nach Erwärmungsanforderungen in unterschiedlicher Art und Weise betrieben werden, wobei die zweite oder dritte Wärmestation wenigstens eine elektrisch betriebene und wenigstens eine mittels Brennstoffverbrennung betriebene Erwärmungseinrichtung besitzt. Die zweie Wärmestation soll hierbei als Nichtdurchgangsstation ausgebildet sein, während die dritte Wärmestation bevorzugt als Durchgangsstation ausgebildet ist. Zum Durchführen bzw. Durchleiten der zu erwärmenden Blechwerkstücke soll eine Hauptgasse vorgesehen sein, in der die dritte Wärmestation angeordnet ist, und zumindest eine Nebengasse, in der die erste und zweite Wärmestation angeordnet sind, wobei die Hauptgasse und die Nebengasse einen Kreuzungsbereich besitzen mit wenigstens einer Weiche für die Übergang der Blechwerkstücke von einer Gasse in die andere Gasse. Bevorzugt ist die zweite Wärmestation als nichtdurchgängige Station ausgebildet, insbesondere ist die zweite Wärmestation als Stapelofen ausgebildet, bzw. besitzt einen Stapelofen.

Aus der DE 10 2009 019 496 A1 ist eine Vorrichtung bekannt, die drei aufeinander folgende Wärmestationen umfasst, welche von zu erwärmenden Blechwerkstücken in Folge bzw. nacheinander durchlaufen werden. Die erste Wärmestation besitzt dabei eine induktive Heizeinrichtung, mit der die zu erwärmenden Blechstücke schnell auf eine hohe Temperatur von bis zum mehreren 100 °C erwärmt werden. Anschließend werden die auf diese Weise angewärmten Blechwerkstücke den nachgeschalteten Wärmestationen zugeführt.

Aus der DE 10 2009 051 157 B4 ist ein Verfahren zum Erwärmen eines Bauteiles für eine Warmumformung bekannt, bei welchem das Bauteil in einem Ofen auf eine Solltemperatur erwärmt wird, wobei der Ofen als Kammerofen ausgeführt ist und die Innentemperatur des Ofens zu jedem Zeitpunkt des Erwärmens über der Solltemperatur des Bauteiles liegt, wobei das Bauteil bei Erreichen der Solltemperatur aus dem Ofen entnommen wird ohne die Übertemperatur des Ofens anzunehmen. Hierbei soll das Verfahren zum Erwärmen eines Bauteiles für eine anschließende Warmumformung dahingehend verbessert werden, dass lange Erwärmungszeiten im Ofen verringert und die Stellfläche der Ofenanlage erheblich reduziert wird.

Aus der DE 10 2010 017 905 A1 ist ein Verfahren zur Warmblechumformung bekannt, bei dem die Warmblechumformung durch die Erwärmung eines Bleches in einem ersten Schritt durch induktive Erwärmung mittels einer ersten Induktionserwärmungsvorrichtung auf eine Temperatur kleiner oder gleich der Curie-Temperatur erfolgt und in einem zweiten Schritt die Erwärmung auf Temperaturen > 800 °C mittels konventioneller Erwärmung in einem Ofen oder mittels induktiver Erwärmung in einem zweiten von der ersten verschiedenen Induktionserwärmungsvorrichtung erfolgt. Bei dem Verfahren kann die Erwärmung im ersten Schritt in zwei Unterschritten erfolgen, wobei in einem ersten Unterschritt das Blech auf eine erste Temperatur erhitzt wird und in einem zweiten Unterschritt das Blech bei einer Temperatur um mehr als 70 K niedriger als die erste Temperatur gehalten werden kann. Hiermit soll ein homogenes Aufschmelzen einer AlSi-Schutzschicht ermöglicht werden. Im ersten Schritt kann hierbei die Schutzschicht auf dem Blech vollständig aufgeschmolzen werden, wobei die Temperatur hier nahe der Curie-Temperatur liegt, also bei 710 °C bis 770 °C. Im zweiten Unterschritt kann ein Diffusionsvorgang erfolgen, wobei dieser für AlSi zwischen 600 °C und 650 °C liegt.

Aus der DE 10 2009 019 573 A1 sind ein Ofen und ein Verfahren zum Erwärmen wenigstens eines Werkstückes bekannt, wobei ein Werkstück mittels eines an eine Transporteinrichtung gekoppelten Werkstückträgers von einem Eingangsbereich zu einem Ausgangsbereich des Ofens transportiert wird. Der Ofen umfasst zwei beheizbare Kammerbereiche, die über- oder auch nebeneinander angeordnet sind. Der Eingangs- und der Ausgangsbereich des Ofens sind ebenfalls über- oder nebeneinander angeordnet. Das zu erwärmende Werkstück wird auf einem Werkstückträger von der Transporteinrichtung erst durch den ersten und dann durch den zweiten Kammerbereich transportiert, dabei ist die Transportrichtung der Werkstückträger im ersten Kammerbereich entgegengesetzt zur Transportrichtung im zweiten Kammerbereich.

Aus der EP 1 830 147 B1 ist ein Mehrkammerdurchlaufofen mit Schutzgasbetrieb und Verfahren zum oxidfreien Erwärmen von verzinkten Werkstücken bekannt, wobei hierdurch ein zunderfreies Erwärmen von verzinkten Werkstücken in einem Durchlaufofen sichergestellt werden soll. Der Ofen ist hierbei in mehrere Kammerbereiche aufgeteilt, in denen jeweils über Einspeisepunkte Schutzgasgemische mit vorzugsweise unterschiedlicher Zusammensetzung eingespeist werden, wobei die Zusammensetzung des Schutzgases an die Temperatur der Werkstücke in dem jeweiligen Ofenbereich angepasst ist. In dem letzten Kammerbereich wird dabei das Schutzgasgemisch mit dem geringsten Sauerstoffanteil eingespeist. Der Durchlaufofen weist zwischen den einzelnen Kammerbereichen entsprechende Schutzgasführungssysteme, vorzugsweise in Form von Trennwänden mit Öffnungen, auf, durch die der Gesamtstrom des Schutzgases so geführt wird, dass eine Konvektionswalze durch den gesamten Durchlaufofen verhindert wird und die Geschwindigkeit des Schutzgasstromes durch den Durchlaufofen höher ist als die Rückdiffusionsgeschwindigkeit. Das Schutzgasgemisch wird durch Teilverbrennung eines Kohlenwasserstoffluftgemisches in einem Edelmetallkatalysator erzeugt.

Aus der DE 10 2012 104 537 A1 sind eine Ofenanlage und ein Verfahren zum Betreiben derselben bekannt, wobei Leichtmetallbauteile durch die Ofenanlage befördert werden und innerhalb der Ofenanlage mit einer Luft- oder Gasströmung erwärmt und gegebenenfalls abgekühlt werden.

Aus der DE 10 2010 010 156 A1 ist ein Verfahren zur Herstellung eines Formteiles mit mindestens zwei Gefügebereichen unterschiedlicher Duktilität bekannt, wobei hierbei die Behandlung und Formung von entsprechenden Halbzeugen oder Platinen im Taktrhythmus des Presshärtewerkzeuges ohne Beeinflussung der Durchlaufgeschwindigkeit durch den Durchlaufofen ermöglicht wird und hierbei das Halbzeug nach Durchlauf durch den Durchlaufofen mit dem zweiten Teilbereich in eine Kammer eines Zwischenspeichers eingelegt wird, der den zweiten Teilbereich auf der Austenitisierungstemperatur hält, während der erste Teilbereich aus der Kammer des Zwischenspeichers vorragt und dieser vorragende Bereich mit Luft auf die Temperatur gekühlt wird, bei welcher das ferritische Gefüge gebildet wird.

Allgemein ist festzustellen, dass das Presshärten eine sehr anspruchsvolle Technik ist, bei der es darauf ankommt, die fertig aufgeheizten Platinen oder Halbzeuge zum richtigen Zeitpunkt in das Werkzeug einzulegen, zu pressen, dadurch abzukühlen und gleichzeitig zu härten.

Zudem ist es wichtig, dass die Bauteile zwar in den zu härtenden Bereichen oder vollständig austenitisiert sind, es ist jedoch nicht angestrebt die Bauteile länger als notwendig in einem Ofen zu lassen.

Während viele Öfen als Durchlauföfen ausgebildet sind, also kontinuierlich beschickt und entladen werden können, wird die Presse getaktet betrieben, so dass die Abstimmung der Beschickung und Entnahme des Ofens einerseits, der Ofenverweildauer andererseits und der Taktung der Presse sehr anspruchsvoll ist.

Insgesamt ist es wünschenswert, dass bei einer Blechstärke von 1 mm bis 2 mm, maximal 0,8 mm bis 3 mm, sowie einer Taktzeit von 10 Sekunden und einer Zieltemperatur der Platine von 900 °C bei ca. 5 Sekunden Haltezeit eine Homogenität von +/- 15 °C über die Platine erreicht wird.

Die im Stand der Technik genannten Erwärmungsmethoden sind insbesondere konduktiv, induktiv oder Wärmestrahlung, insbesondere durch offene Gasflammen. Es hat sich gezeigt, dass keine dieser Erwärmungsformen tatsächlich den Anforderungen über den gesamten Prozess voll genügt.

Bekannte Öfen zum Strahlungserwärmen sind beispielsweise Kettenträgeröfen, Rollenherdöfen, Hubschrittförderöfen und Mehrkammeröfen.

Bei den aus dem Stand der Technik bekannten Verfahren und Vorrichtungen zur Strahlungserwärmung von Bauteilen sind in der Regel relativ lange Ofenzeiten notwendig, um die Bauteile auf die gewünschte Temperatur aufzuheizen.

Weiterhin wird bei derartigen Erwärmungsarten entweder Schutzgas verwendet oder Sauerstoff kann ungehindert die Bauteiloberfläche kontaktieren.

Bei verzinkten Bauteilen kommt es aufgrund der langen Ofenzeiten, wie sie z.B. in Strahlungsöfen notwendig sind, zu verschiedenen Nachteilen. Diese Nachteile bestehen darin, dass sich die Gammaphase relativ schnell auflöst, der Fe-Gehalt steigt und das elektrochemische Potenzial steigt. Zudem sind die Prozessfenster zeitlich begrenzt. Aufgrund der zu einem wirtschaftlichen Betrieb notwendigen kurzen Taktzeit werden häufig relativ lange Öfen verwendet, die mit mehreren Teilen nacheinander beschickt werden. Kommt es zu Problemen bzw. Störungen in der Presse oder im Ofen erhöht sich dadurch der Ausschuss, da für sämtliche der im Ofen befindlichen zahlreichen Teile die Prozessfensterobergrenze überschritten wird..

Wenn es bei verzinkten Bauteilen zu einer starken Oxidbildung kommt, müssen diese Teile im Anschluss gereinigt werden.

Wird hingegen eine sauerstofffreie Atmosphäre bei verzinkten Bauteilen verwendet, kommt es meist zu einem Abbrand, da sich keine (dünne) Oxidschicht bilden kann.

In der EP 2 014 777 B1 sind ein Verfahren sowie eine Vorrichtung zur thermischen Behandlung von Metallblech offenbart. Hierbei ist vorgesehen, einen Metallkörper in einem ersten Verfahrensschritt zu erwärmen und in einem anschließenden Verfahrensschritt mit mindestens einer Kontaktplatte in Kontakt zu bringen. Dabei besitzt die Kontaktplatte eine gegenüber dem Metallkörper niedrigere Temperatur. Durch die niedrigere Temperatur der Kontaktplatten wird der Metallkörper nach dem Erwärmen gekühlt. Dabei soll diese Kühlung aufgrund der Kontaktplatten hinsichtlich der Temperaturkontrolle gut steuerbar sein.

Aus der DE 10 2011 053 672 A1 gehen ein Verfahren sowie eine Anordnung zum Erwärmen einer Metallplatine hervor. Hierbei ist vorgesehen, eine Metallplatine in einer Heizvorrichtung zu erwärmen, wobei die Heizvorrichtung wenigstens ein unteres Kontaktelement und zumindest ein oberes Kontaktelement aufweist, so dass die Metallplatine zwischen den an ihre Kontur angepassten Kontaktelementen durch Zufuhr von Heizenergie auf eine Temperatur von 200°C bis 450°C erwärmt wird.

In der DE 10 2011 102 167 A1 sind ein Verfahren zur Herstellung eines Formbauteils mit mindestens zwei Gefügebereichen unterschiedlicher Duktilität sowie eine Erwärmungseinrichtung offenbart. Gemäß diesem Verfahren soll eine Platine in einer Erwärmungseinrichtung derart mit zumindest einer mindestens zwei Heizsegmente aufweisenden Heizplatte kontaktieren, dass das erste auf eine Temperatur A eingestellte Heizsegment einen ersten Bereich der Platine auf eine Temperatur A und das zweite, auf eine Temperatur B eingestellte Heizsegment den zweiten Bereich der Platine auf eine Temperatur B erwärmt, wobei die Erwärmung des ersten Bereichs und des zweiten Bereichs der Platine jeweils durch Wärmeleitung erfolgt.

Aus der EP 2 182 081 A1 gehen ein Verfahren sowie eine Vorrichtung zur thermischen Behandlung eines beschichteten Stahlkörpers hervor. Hierbei ist vorgesehen, einen Stahlblechkörper vor einem Warmumformprozess mit mindestens einer ersten Kontaktplatte mit mindestens einem ersten Flächenabschnitt des Stahlblechkörpers in Kontakt zu bringen und mindestens eine zweite Kontaktplatte mit mindestens einem zweiten Flächenabschnitt des Stahlblechkörpers in Kontakt zu bringen. Während der Kontaktierung soll eine Kontaktplatte eine gegenüber dem Stahlblechkörper höhere Temperatur aufweisen.

In der EP 2 237 639 A1 sind eine Vorrichtung und ein Verfahren zum Erwärmen eines Körpers beschrieben. Hierbei ist eine Kontaktplatte, die zumindest zwei Heizelemente aufweist, vorgesehen, um dem zu erwärmenden Körper zu kontaktieren.

Aus der EP 2 395 116 A2 geht eine Vorrichtung zum Erwärmen von Stahlplatten hervor. Mittels dieser Vorrichtung soll es möglich sein, mit einer Kontaktplatte unterschiedliche Bereiche der Stahlplatte auf unterschiedliche Temperaturen aufzuheizen.

Aus der JP 2007-245196 A sowie der JP 2009-095869 A gehen Vorrichtungen zur Kontakterwärmung hervor.

In der WO 2010/048950 A1 ist ein Verfahren zur thermischen Behandlung eines beschichteten Stahlblechkörpers beschrieben. Gemäß diesem Verfahren ist vorgesehen, dass mindestens eine Kontaktplatte zu Erwärmen des Stahlblechkörpers eine höhere Temperatur während der Kontaktierung von oberhalb A_{c3}, insbesondere eine Temperatur zwischen 20°C und 250°C von A_{c3} aufweist, so dass eine Austenitisierung des Stahlblechkörpers erfolgt.

Aus der WO 2012/045647 A1 sind ein Verfahren sowie ein Ofen zum Behandeln von Werkstücken beschrieben. Dabei soll ein Werkstück in dem Ofen von wenigstens zwei Heizelementen erwärmt werden. Insbesondere weisen die Heizeinheiten beheizbare Druckstempel auf.

Aufgabe der Erfindung ist es, ein Verfahren zum Aufheizen von Stahlblechen zum Zwecke der Warmumformung und Härtung zu schaffen, mit der diese zuverlässig und nachvollziehbar auf die notwendige Temperatur gebracht werden können.

Die Aufgabe wird mit einem Verfahren mit den Merkmalen des Anspruchs 1 gelöst.

Grundsätzlich ist das Verfahren ein diskontinuierliches bzw. getaktetes Verfahren, so dass z. B. kein Rollenherd oder Durchlaufofen grundsätzlich verwendet wird. Die Heizeinrichtung bzw. der Ofen umfasst mindestens zwei Stationen, es können jedoch auch zwei baulich getrennte Öfen verwendet werden, wobei die Zonen bei einer baulichen Einheit z. B. durch Schamotte, Isolierplatten, Trennbleche oder ähnlichen Elementen abgeschirmt sind.

Hierbei werden spezifische Erwärmungsarten verwendet, wobei die Erwärmung in der Station 1 induktiv, über Plattenerwärmung, über Strahlrohre oder Gasbrenner und in der Station 2 über Strahlrohre, Gasbrenner oder Platten, jedoch keinesfalls Induktion erfolgt. Die Aufheizrate des Blechs in Station 1 ist von Raumtemperatur bis 600 °C > 25 K/s, über 600 °C bis kleiner blechspezifische AC3 > 10 K/s und die Aufheizrate des Blechs in Station 2 ist > 10 K/s.

Alle Aufheizraten in dieser Anmeldung beziehen sich auf die durchschnittliche Heizrate über den angegebenen Temperaturbereich.

Das Blech ist ein zinklegierungsbeschichtetes Blech, wobei das Blech aus einem Bor-Mangan-Stahl besteht.

Da sich die Emissivität von reinen Zinkbeschichtungen bzw. reine Schmelztauchbeschichtungen während des Erwärmens ändert und damit auch das Verhalten bezüglich der Wärmeaufnahme, wird nach der Erfindung bevorzugt galvannealed Blech (ZF) eingesetzt, weil es seine Emissivität zu einem geringeren Ausmaß ändert.

Insbesondere werden die Bleche einem sogenannten direkten Prozess zugeführt, d. h. die Bleche werden nach dem Erwärmen direkt umgeformt und gehärtet. Bevorzugt bestehen diese Bleche hierbei aus sogenannten Bor-Mangan-Stählen, wie den verbreiteten 22MnB5, jedoch sind auch andere geeignete abschreckhärtbare Stahlsorten denkbar.

Grundsätzlich besteht die Vorrichtung aus einer Vorheizzone, einer Austenitisierungszone und einer Homogenisierungs- und Haltezone. Theoretisch wäre auch die Verwendung von vorgewärmten Platinen aus z. B. Durchlaufofen denkbar.

In der Zone 1 wird mit einer Aufheizrate von beispielsweise Raumtemperatur bis ca. 600 °C > 25 K/s über ca. 600 °C mit einer Aufheizrate von > 10 K/s auf eine Temperatur aufgeheizt, die unter der AC3-Temperatur des Stahlwerkstoffes liegt, d. h. dass keine Austenitisierung stattfindet.

Die zweite Zone ist die Austenitisierungszone, bei der die Bleche auf zumindest teilbereichsweise ca. 900 °C, bevorzugt 850 °C aufgeheizt werden, mit einer Rate, die > 10 K/s beträgt.

In der dritten Zone werden die Bleche bei 850 °C bis 950 °C, bevorzugt 900 °C gehalten.

In den Zonen 2 und 3 kann eine elektrische Heizung bevorzugt durchgeführt werden, mit Kühleinsätzen, wobei in der Zone 3 optional auch ohne zusätzliche Energiezu- und -abfuhr gearbeitet werden kann, wenn sich bei dem Prozess herausstellt, dass die Bleche mit ausreichender Wärme aus der Austenitisierungszone gelangen.

Mit einer Aufheizrate > 25 K/s werden die Bleche einem ausgesprochenem Schnellerwärmen ausgesetzt, wobei, wie bereits ausgeführt, insbesondere feuerverzinktes Material (Z) für die Schnellerwärmung mittels Strahlung ungeeignet ist, da die Emissivität sich sprunghaft ändert. Dies gilt jedoch nicht für galvannealed Beschichtungen (ZF).

In der Zone 1, der Vorheizzone, werden beispielsweise Mantelstrahlrohre oder offene Flammen bevorzugt verwendet, wobei die Temperatur der Zone ca. 1.300 °C beträgt, so dass die Platine bis etwa 600 °C in rund 10 Sekunden erhitzt wird.

Alternativ kann die Zonentemperatur ca. 1.100 °C betragen, so dass 600 °C Platinentemperatur nach etwa 20 Sekunden erreicht werden, wobei zwei Platinen jeweils gleichzeitig in der Zone 1 vorgehalten werden können.

Alternativ kann in Zone 1 mittels eines Längsfeldinduktors die Platine von Raumtemperatur auf Curie Temperatur erwärmt werden.

Bevorzugt wird in der Zone 2, der Austenitisierungszone, ein elektrisches Heizmodul verwendet, welches allerdings an die Platinenform angepasst sein muss.

Tailored parts und sogenannte tailored property parts bzw. partiell gehärtete Platinen können durch bauteilspezifische Optimierung der Meander der Heizeinrichtung und gegebenenfalls Kühleinsätze realisiert werden.

In dieser Zone werden Zonentemperaturen von 1.000 °C bis 1.400 °C bevorzugt 1.100 °C bis 1.300 °C vorgehalten, um die Platine von rund 600 °C auf ca. 850 °C in etwa 10 Sekunden zu erhitzen.

In der Haltezone sind die technischen Ausführungen im Wesentlichen der Zone 2 entsprechend, wobei jedoch die Zonentemperatur mit rund 950 °C deutlich niedriger ist.

Um bei tailored property parts bzw. partiell gehärteten Formteilen Bereiche, die ungehärtet bleiben sollen, d. h. nicht die AC1 Temperatur überschreiten, zu erzielen, können diese beim Durchgang durch die Heizeinrichtung abgeschirmt werden, z. B. mit am Platinenträger befestigten Faserverbundkeramikplatten.

Unterschiedliche Temperaturen über die Platine lassen sich hierbei in den elektrisch beheizten Zonen 2 und 3 inklusive durch Hinzunahme von Kühleinsätzen einprägen, wobei die Platine insbesondere die 600 °C bis 700 °C, maximal 750 °C in allen Bereichen behält, jedoch die Bereiche, die austenitisiert werden sollen, höher erhitzt sind.

Bei tailored welded blanks, d. h. Blechen, die aus Blechen unterschiedlicher Dicke zusammengeschweißt sind, werden in Zone 1 die dünneren Bereiche eine höhere Temperatur annehmen als die dickeren Bereiche, wobei sich dieser Temperaturunterschied durch eine einseitige Abschirmung oder in den elektrisch beheizten Zonen 2 und 3 ausgleichen lässt.

Erfindungsgemäß wurde erkannt, dass die Emissivität der Laserschweißnaht bei TWB-Blechen höher ist als die des Zinks, so dass in den Zonen 2 und 3 entsprechend durch Abschirmungen und/oder entsprechende selektive Beheizung auch die Bereiche der Laserschweißnaht mit der restlichen Platine homogenisiert werden können.

Erfindungsgemäß soll die Wärmekapazität des Platinenträgers im Ofen möglichst niedrig ausfallen. Erfindungsgemäß sind deshalb Keramikteile, insbesondere Faserverbundkeramikteile, bevorzugt, da sie hohe Festigkeiten besitzen, verbunden mit einem günstigen Emissionsverhalten, einer geringen Wärmeleitfähigkeit und einer geringen volumetrischen Wärmekapazität.

Sofern Abschirmbleche verwendet werden, müssen diese vor einer wiederholten Verwendung ausreichend abkühlen, sodass die abgeschirmten Platinenbereiche gesichert die AC3-Temperatur insbesondere AC1-Temperatur nicht erreichen, wobei es vorteilhaft ist eine im Verhältnis größere Zahl an Abschirmblechen vorzuhalten, so dass jeweils frische Abschirmbleche dem Schnellerwärmungsprozess zugeführt werden, während die verwendeten Abschirmbleche abkühlen gelassen werden. Alternativ können die Abschirmbleche auch aktiv gekühlt werden.

Um die Stahlbleche zum Zwecke der Warmumformung und Härtung auf die notwendige Temperatur zu bringen kann alternativ zum vorstehend beschriebenen vorgesehen sein, dass in der ersten Zone und/oder in der zweiten Zone und/oder in der dritten Zone jeweils zumindest zwei Kontaktplatten vorgesehen sind.

Hierbei ist vorgesehen dass ein zu behandelndes Blechteil zwischen diesen zumindest zwei Kontaktplatten angeordnet wird, um dieses auf die notwendige Temperatur zu bringen.

Dabei ist erfindungsgemäß vorgesehen, die erste, die zweite und/oder die dritte Zone als Strahlungsöfen auszubilden. Die beiden Kontaktplatten können dann bspw. auf, auf Schamottsteinen ausgebildeten, Spitzen, die normalerweise zur Aufnahme von Blechteilen vorgesehen sind, angeordnet werden.

Alternativ kann auch vorgesehen sein, dass die Kontaktplatte elektrisch oder mittels Strahlrohren erwärmt werden.

Demgemäß sind eine oberseitige und eine unterseitige Kontaktplatte in einem solchen Ofen anordbar, so dass diese auf die gewünschte Temperatur aufgeheizt werden.

Nachdem die obere und die untere Kontaktplatte die gewünschte Temperatur erreicht haben, ist dann vorgesehen, ein Blechteil im Bereich zwischen den beiden Kontaktplatten anzuordnen.

Gemäß einer vorteilhaften Ausführungsform entsprechen die obere und die untere Kontaktplatte in ihrer Form und Geometrie in etwa dem zu erwärmenden Blechteil.

Dadurch, dass die obere und die untere Kontaktplatte in etwa der Geometrie des Blechteils entsprechen, wird verhindert, dass die Kontaktplatten in den Bereichen, in denen sie nicht mit einem Blechteil kontaktieren, stark verzundern.

Die Kontaktplatten können aus einem Warmarbeitsstahl ausgebildet sein.

Die Blechteile werden mittels der Kontaktplatten über Wärmeleitung, Wärmestrahlung Strahlung und/oder Konvektion erhitzt.

Bei der Erwärmung mittels Kontaktplatten im Strahlungsofen ergeben sich für verzinkte Blechteile diverse Vorteile.

Das Erwärmen auf die gewünschte Temperatur erfolgt relativ schnell, wodurch eine Produktion von Stahlblechen im Prozesspunkt möglich ist. Dadurch verringert sich auch die Schrottquote. Zudem ist eine derartige Erwärmung von Stahlblechteilen äußerst energieeffizient, da Wärmeverluste verringert werden und idealerweise primär Energie zum Aufheizen verwendet werden kann. Zudem sind derartige Anlagen mit Strahlungsöfen und darin angeordneten Kontaktplatten zum Erwärmen von Stahlblechteilen äußerst kompakt und benötigen daher nur geringen Platz. Zudem sind derartige Anlagen äußerst kostengünstig ausgebildet.

Weiterhin ergeben sich mit einer derartigen Anlage auch positive Auswirkungen auf die Schichtbildung. Durch die Oxidausbildung kann zumeist auf eine Reinigung der Blechteile verzichtet werden. Es ergibt sich ein verbesserter Schweißwiderstand. Zudem haftet Lack auf den Oberflächen der Bauteile durch die Oxidausbildung besser an. Überdies ergibt sich ein geringer Fe-Gehalt. Weiterhin ist eine gute elektrochemische Potenzialdifferenz zwischen Schicht und Substrat vorhanden. Weiterhin ergibt sich eine verbesserte Korrosionsschutzwirkung von verzinktem Vormaterial sowohl im direkten Prozess und auch im indirekten Prozess.

Die Erfinder habe überraschenderweise herausgefunden, dass obwohl die Oberflächen der Stahlbleche mit den Kontaktplatten bedeckt sind die Zinkschicht im Ofen nicht abbrennt, da sich auch im Kontaktbereich zwischen dem Stahlblech und den Kontaktplatten genügend Oxide bilden.

Dies ist darauf zurückführbar, dass die Oxide auf dem Stahlblech durch Reduktion von Fe-Oxiden auf der Oberfläche der aus Warmarbeitsstahl ausgebildeten Kontaktplatten entstehen.

Auch im ungereinigten Zustand weisen derart behandelte Stahlblechteile geringe Übergangswiderstände auf.

Mittels eines derartigen Verfahrens kann eine genau definierte Temperatur in die Bereiche des Stahlblechs eingebracht werden, die mit den Kontaktplatten kontaktieren. Auf diese Weise ist es möglich, die sich durch die thermische Behandlung einstellenden Werkstoffeigenschaften sehr exakt und homogen einzustellen.

Eine derartige Erwärmung mittels Kontaktplatten in einem Strahlungsofen ist äußerst variabel einsetzbar, da sowohl die Temperatur der Kontaktplatte als auch die Zeit für die Kontaktierung zwischen Kontaktplatten und Metallblech nahezu beliebig einstellbar ist. Auf diese Weise kann ein erfindungsgemäßes Verfahren variabel an die gewünschten Parameter der thermischen Behandlung sowie an den zu behandelnden Werkstoff angepasst werden.

Vorzugsweise ist vorgesehen, dass sich die Kontaktplatte und das zu behandelnde Stahlblech direkt berühren.

In einer weiteren Ausführungsvariante kann ein anpressen der Kontaktplatten auf das Stahlblech mit einer Kraft von 0,01 bis 0,6 MPa insbesondere 0,1 bis 0,3 MPa vorgesehen sein. Dies verbessert den Wärmeübergang und daraus folgend die Aufheizgeschwindigkeit.

Es können auch zwei oder mehr Kontaktplatten für eine Bauteiloberfläche vorgesehen sein um unterschiedliche Bereiche eines Stahlbleches mit unterschiedlichen Temperaturen zu behandeln.

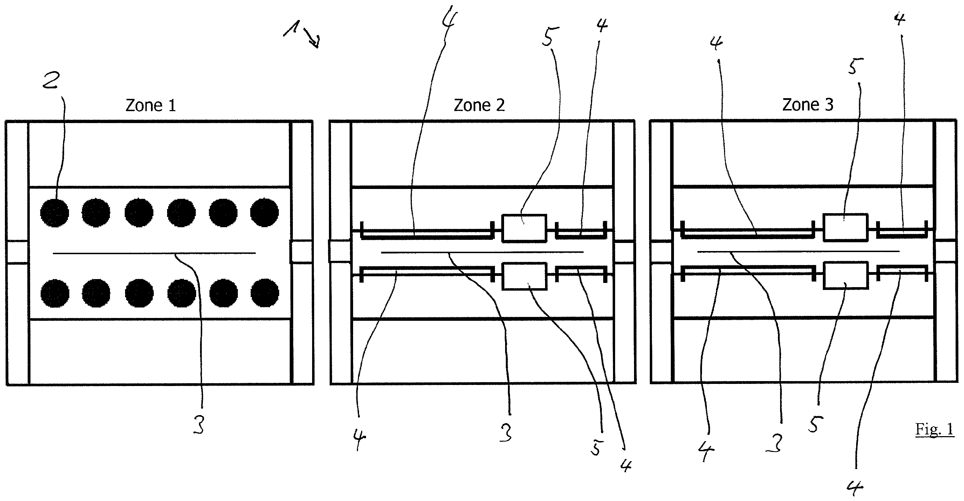

Die Erfindung wird anhand einer Zeichnung beispielhaft erläutert, die einzige Figur zeigt dabei stark schematisiert die Vorrichtung zum Durchführen des erfindungsgemäßen Verfahrens zum Erwärmen von Stahlblechplatinen in einem Querschnitt.

Die Vorrichtung 1 ist eine Erwärmungsvorrichtung, welche es ermöglicht Bleche in drei unterschiedlichen Zonen aufzuheizen bzw. auf Temperatur zu halten. Hierbei können die Zonen in einem baulich eine Einheit bildenden Ofen gebildet sein, es können aber auch die Zonen baulich getrennt voneinander angeordnet sein. Der Transport von den Zonen zueinander bzw. in die Zone 1 hinaus oder aus der Zone 3 hinaus erfolgt üblicherweise mit Platinenträgern, die mit Greifern in die jeweiligen Zonen eingelegt werden oder innerhalb der Zonen mit an sich bekannten Vortrieben.

Gleich ob die Platinenträger eingelegt werden oder angetrieben werden, wird eine getaktete an den Pressentakt angepasste Fortbewegung bevorzugt.

Die Zone 1 ist eine Vorheizzone mit Schnellerwärmung, wobei in der Vorheizzone Mantelstrahlrohre 2 (oder offene Flammen) auf die Platine 3 einwirken. Die Zonentemperatur beträgt hierbei ca. 1.300 °C, da eine solch hohe Zonentemperatur eine schnelle Erwärmung der Platinen auf etwa 600 °C in 10 Sekunden sicherstellt.

Alternativ kann die Zonentemperatur etwas niedriger gewählt sein, so dass eine Platinentemperatur von 600 °C nach 20 Sekunden erreicht wird, wobei jedoch zwei Platinen gleichzeitig in der Zone 1 aufgeheizt werden. Nachdem die Platinen in der Zone 1 aufgeheizt wurden, werden sie in die Zone 2 transferiert.

Die Zone 2 ist die Austenitisierungszone, wobei in der Austenitisierungszone elektrische Heizmodule 4, welche an die Platinenform angepasst sind, auf die Platine einwirken und die Temperatur von den bestehenden mindestens 600 °C der Platine auf 850 °C mit einer Aufheizrate von > 10 K/s bewerkstelligen. Die Zonentemperatur ist hierbei auf etwa 1.200 °C eingestellt.

Die elektrischen Heizmodule 4 können über die Anzahl und Dichte der Meander auf die Platine, insbesondere vorhandene Laserschweißnähte, Blechdickenunterschiede bzw. unterschiedliche Emissivitäten der Oberflächen der Platinen, angepasst sein.

Um in Bereichen, in denen die Austenitisierungstemperatur nicht erreicht werden soll, dafür zu sorgen, dass die Platine sich nicht weiter aufheizt, sind Kühleinsätze bzw. Kühlelemente 5 vorhanden. Die Kühleinsätze bzw. Kühlelemente sind so angeordnet, dass die Bereiche, die duktiler verbleiben sollen, in wirkungsvoller Weise nicht die Austenitisierungstemperatur erreichen. Anstelle von Kühlelementen kann dies auch durch gegebenenfalls vorhandene Abschirmungen, die z. B. aus Faserverbundbauteilen gebildet sein können, oder Abschirmblechen gewährleistet werden.

Aufgrund der hohen Zonentemperaturen in der Zone 1 und der Zone 2 ist es besonders bevorzugt, dass die Platinen lediglich die Zeit in diesen Zonen verbringen, die zur Erreichung der Zieltemperatur der Platine notwendig ist, jedoch nicht weiter in diesen Zonen verbleiben, da ansonsten eine unerwünschte Überhitzung stattfinden kann. Diese kann in Zone 2 allerdings durch die Regelung der elektrischen Heizmodule notfalls vermindert werden.

Die Zone 3, welche optional vorhanden sein kann, ist eine Haltezone, welche vom Aufbau her mit Zone 2 vergleichbar bzw. identisch ist, jedoch eine deutlich niedrigere Zonentemperatur besitzt (ca. 950 °C), die dazu geeignet ist, unter Berücksichtigung des Wärmeübergangs, zwischen den elektrischen Heizmodulen einerseits und den Kühlelementen andererseits über die Ofenatmosphäre auf bzw. von der Platine die voreingestellten Temperaturen, mit denen die Platine die Zone 2 verlassen hat, und/oder das Temperaturprofil, mit dem die Platine die Zone 2 verlassen hat, zu halten.

Hierbei kann, insbesondere bei umwandlungsverzögerten härtbaren Stählen in der Zone 3 auch eine Abkühlung der Platine in kontrollierter Weise erfolgen, sofern ein voreingestelltes Temperaturprofil erhalten bleibt und keine Umwandlung stattfindet.

Die Zone 3 kann hierbei dazu geeignet sein Taktunterschiede zwischen Zone 1 und Zone 2 einerseits und der Presse andererseits auszugleichen. Hierzu kann insbesondere die Zone 3 auch über mehrere Positionen verfügen, in denen die Platinen bis zur Umformung entsprechend gehalten werden können.

Die Zonen 1, 2 und 3 können über ein gekoppeltes Transportsystem oder einzelne Transportsysteme verfügen, wobei die Kopplung sowohl mechanischer als auch steuerungstechnischer Art sein kann.

Als besonders bevorzugt hat es sich ergeben, in den zwei Stationen mit sehr hohen Aufheizraten zu arbeiten, wobei die Aufheizraten theoretisch gleich sein können, bevorzugt die Aufheizrate in der ersten Zone bis rund 600 °C > 25 K/s beträgt, über 600 °C > 10 K/s beträgt, so dass die Grundaufheizung der Platine sehr schnell vonstattengeht. Die Aufheizrate der Platine in der zweiten Zone ist üblicherweise etwas geringer und beträgt > 10 K/s, mit der die Austenitisierungstemperatur erreicht wird.

In der optionalen dritten Zone ist die Aufheizrate geringer als 10 K/s und insbesondere kann die Aufheizrate dort faktisch nicht vorhanden sein und lediglich eine thermische Homogenisierung und ein Halten der Platine stattfinden.

Um die Stahlbleche zum Zwecke der Warmumformung und Härtung auf die notwendige Temperatur zu bringen kann alternativ zum vorstehend beschriebenen vorgesehen sein, dass die Vorrichtung in der ersten Zone und/oder in der zweiten Zone und/oder in der dritten Zone jeweils zumindest zwei Kontaktplatten aufweist.

Hierbei ist vorgesehen, dass ein zu behandelndes Blechteil zwischen zwei Kontaktplatten angeordnet wird, um dieses auf die notwendige Temperatur zu bringen.

Die erste, die zweite und/oder die dritte Zone sind dann als Strahlungsöfen ausgebildet. Die beiden Kontaktplatten können dann bspw. auf, auf Schamottesteinen ausgebildeten, Spitzen, die normalerweise zur Aufnahme von Blechteilen vorgesehen sind, angeordnet werden.

Demgemäß sind eine oberseitige und eine unterseitige Kontaktplatte in einem solchen Ofen anordbar, so dass diese auf die gewünschte Temperatur aufgeheizt werden.

Nachdem die obere und die untere Kontaktplatte die gewünschte Temperatur erreicht haben, ist dann vorgesehen, ein Blechteil im Bereich zwischen den beiden Platten anzuordnen.

Gemäß einer vorteilhaften Ausführungsform entsprechen die obere und die untere Platte in ihrer Form und Geometrie in etwa dem zu erwärmenden Blechteil.

Die Stahlplatten sind aus einem Warmarbeitsstahl ausgebildet. Selbstverständlich können die Kontaktplatten auch außerhalb des Strahlungsofens angeordnet sein.

### Bezugszeichenliste:

- 1: Vorrichtung
- 2: Mantelstrahlrohre
- 3: Platine
- 4: elektrische Heizmodule
- 5: Kühleinsätze/Kühlelemente

## Patentansprüche

1. Verfahren zum Aufheizen einer Platine oder einem vorgeformten Stahlblechbauteil zum Zwecke der Warmumformung und/oder der Abschreckhärtung, wobei die Erhitzung zumindest teilbereichsweise auf eine Temperatur oberhalb AC3 durchgeführt wird, wobei die Erhitzung der Platine als Schnellerwärmung durchgeführt wird und hierzu die Platine in einer ersten Zone mit einer durchschnittlichen Aufheizrate von > 25 K/s bis ca. 600 °C und über dieser Temperatur mit einer durchschnittlichen Aufheizrate von > 10 K/s auf maximal AC3-Temperatur erhitzt wird und anschließend in eine zweite Zone überführt wird, in der die in der ersten Zone vorerhitzte Platine zumindest teilbereichsweise auf Temperaturen über AC3 insbesondere > 850 °C erhitzt wird, wobei die Aufheizrate in der zweiten Zone > 10 K/s beträgt, wobei nach der Zone 2 eine dritte Zone vorhanden ist, welche als Homogenisierungs- und Haltezone ausgebildet ist, wobei die Aufheizrate dort < 10 K/s beträgt oder die Heizleistung so bemessen ist, dass eine kontrollierte Temperaturabnahme der Platine, jedoch ohne Unterschreitung der Umwandlungspunkte der austenitisierten Bereiche, oder ein Halten der Temperatur und des Temperaturprofils sichergestellt ist, wobei die Platine aus einem beschichteten Blech ausgebildet wird und das Blech ein zinklegierungsbeschichtetes Blech ist, wobei das Blech aus einem Bor-Mangan-Stahl besteht.

2. Verfahren nach Anspruch 1, **dadurch gekennzeichnet,**
**dass** die erste Zone mit Mantelstrahlrohren oder offenen Flammen erhitzt wird.

3. Verfahren nach Anspruch 2, **dadurch gekennzeichnet, dass** die Zonentemperatur in der ersten Zone etwa 1.100 °C bis 1.300 °C beträgt.

4. Verfahren nach einem der vorhergehenden Ansprüche, **dadurch gekennzeichnet, dass** die Zonentemperatur in der zweiten Zone etwa 1.000 °C bis 1.400 °C, bevorzugt 1.100 °C bis 1.300 °C beträgt.

5. Verfahren nach Anspruch 1 oder 2, **dadurch gekennzeichnet, dass** die Platinen in der ersten Zone durch einen Längsfeldinduktor erhitzt werden.

6. Verfahren nach Anspruch 1, **dadurch gekennzeichnet, dass** das Aufheizen einer Platine oder eines vorgeformten Stahlblechbauteil zum Zwecke der Warmumformung und/oder der Abschreckhärtung in der ersten Zone und/oder in der zweiten Zone und/oder in der dritten Zone mittels zumindest zweier Kontaktplatten erfolgt.

7. Verfahren nach Anspruch 6, **dadurch gekennzeichnet, dass** eine zu behandelnde Platine oder ein vorgeformtes Stahlblechbauteil zwischen zwei Kontaktplatten angeordnet wird, um dieses auf die notwendige Temperatur zu bringen.

## Claims

1. Method for heating a plate or a preformed steel sheet component for the purpose of hot reshaping and/or quench hardening, wherein heating is carried out at least in part areas to a temperature above AC3, wherein heating the plate is carried out as rapid heating and the plate is heated in a first zone with an average heating rate of > 25 K/s to approx. 600°C and above this temperature with an average heating rate of > 10 K/s to a maximum AC3 temperature for this, and is then transferred to a second zone, in which the plate pre-heated in the first zone is heated at least in part areas to temperatures above AC3, in particular > 850°C, wherein the heating rate in the second zone is > 10 K/s, wherein a third zone is provided after zone 2, which is designed as a homogenisation and holding zone, wherein the heating rate there is < 10 K/s or the heating capacity is sized in such a way that a controlled temperature decrease of the plate is ensured, although without falling below the transformation points of the austenitised areas, or a holding of the temperature and the temperature profile, wherein the plate is designed of coated sheet metal and the sheet metal is a zinc alloy coated sheet metal, wherein the sheet metal consists of boron manganese steel.

2. Method according to claim 1, **characterised in that** the first zone is heated with jacketed jet tubes or open flames.

3. Method according to claim 2, **characterised in that** the zone temperature in the first zone is approximately 1,100°C to 1,300°C.

4. Method according to any one of the preceding claims, **characterised in that** the zone temperature in the second zone is approximately 1,000°C to 1,400°C, preferably 1,100°C to 1,300°C.

5. Method according to claim 1 or 2, **characterised in that** the plates are heated in the first zone with a longitudinal field inductor.

6. Method according to claim 1, **characterised in that** heating a plate or a preformed steel sheet component for the purpose of hot reshaping and/or quench hardening takes place in the first zone and/or in the second zone and/or in the third zone by means of at least two contact plates.

7. Method according to claim 6, **characterised in that** a plate to be treated or a preformed steel sheet component is arranged between two contact plates for bringing this to the necessary temperature.

## Revendications

1. Procédé de chauffage d'un flan ou d'un élément préformé en tôle d'acier pour le formage à chaud et/ou le durcissement par trempe, le chauffage étant mis en œuvre au moins par endroits à une température supérieure à AC3, le chauffage du flan étant mis en œuvre en tant que chauffage rapide et, le flan étant chauffé à cet effet dans une première zone à une vitesse de chauffage moyenne > 25 K/s jusqu'à environ 600 °C et au-delà de cette température, à une vitesse de chauffage moyenne > 10 K/s jusqu'à une température maximale AC3, puis transféré dans une deuxième zone dans laquelle le flan préchauffé dans la première zone est chauffé au moins par endroits à des températures supérieures à AC3, en particulier > 850 °C, la vitesse de chauffage étant > 10 K/s dans la deuxième zone, une troisième zone étant disponible après la zone 2, laquelle troisième zone se présente sous la forme d'une zone d'homogénéisation et de maintien, la vitesse de chauffage étant < 10 K/s à cet endroit ou la puissance de chauffage étant mesurée de telle manière qu'une diminution contrôlée de la température du flan, mais sans descendre sous les points de transformation des zones austénitisées, ou qu'un maintien de la température et du profil de température est garanti(e), le flan étant formé à partir d'une tôle revêtue et la tôle étant une tôle revêtue d'un alliage de zinc, la tôle étant constituée d'un acier au bore-manganèse.

2. Procédé selon la revendication 1, **caractérisé en ce que** la première zone est chauffée par des tubes radiants à enveloppe ou des flammes nues.

3. Procédé selon la revendication 2, **caractérisé en ce que** la température des zones est d'environ 1100 °C à 1300 °C dans la première zone.

4. Procédé selon l'une quelconque des revendications précédentes, **caractérisé en ce que** la température des zones est d'environ 1000 °C à 1400 °C dans la deuxième zone, de préférence de 1100 °C à 1300 °C.

5. Procédé selon la revendication 1 ou 2, **caractérisé en ce que** les flans sont chauffés dans la première zone par un inducteur à champ longitudinal.

6. Procédé selon la revendication 1, **caractérisé en ce que** le chauffage d'un flan ou d'un élément préformé en tôle d'acier pour le formage à chaud et/ou le durcissement par trempe a lieu dans la première zone et/ou dans la deuxième zone et/ou dans la troisième zone au moyen d'au moins deux plaques de contact.

7. Procédé selon la revendication 6, **caractérisé en ce qu'**un flan à traiter ou un élément préformé en tôle d'acier est disposé entre deux plaques de contact afin de l'amener à la température nécessaire.
